# NEUE EUROPÄISCHE PATENTSCHRIFT

(11) **EP 2 227 963 B2**
(45) Veröffentlichungstag und Bekanntmachung des Hinweises auf die Entscheidung über den Einspruch: **26.03.2014**
(45) Hinweis auf die Patenterteilung: 06.07.2011
(21) Anmeldenummer: 09003701.1
(22) Anmeldetag: 13.03.2009
(51) Int. Cl.: A22C 11/02

(54) **Haltevorrichtung**
Holding device
Dispositif de retenue

(43) Veröffentlichungstag der Anmeldung: 15.09.2010
(73) Patentinhaber: Albert Handtmann Maschinenfabrik GmbH & Co. KG, 88400 Biberach (DE)
(72) Erfinder: Maile, Bernd, 88422 Oggelshausen (DE); Kibler, Armin, 88436 Eberhardzell (DE)
(74) Vertreter: Grünecker, Kinkeldey, Stockmair & Schwanhäusser

(56) Entgegenhaltungen:
- EP-A- 0 232 812
- EP-A- 1 260 143
- EP-A- 1 588 621
- DE-A1- 19 517 995

## Beschreibung

Die Erfindung betrifft eine Haltevorrichtung gemäß dem Oberbegriff des Anspruchs 1 sowie eine Füllmaschine mit einer solchen Haltevorrichtung und ein Verfahren zum Positionieren einer solchen Haltevorrichtung.

Eine Vorrichtung gemäß dem Oberbegriff des Anspruchs 1 ist aus der EP-A-15 88 621 bekannt. Eine Haltevorrichtung mit einem Bremsringgehäuse kann aus einer Arbeitsposition weggeschwenkt werden, um das Ende des Füllrohrs freizulegen. Dabei wird der Antriebsstrang abgekoppelt.

Eine derartige Haltevorrichtung ist aus dem Stand der Technik bekannt. An der Stirnseite einer Füllmaschine zum Füllen und Abdrehen von Würsten befindet sich im Allgemeinen das Abdrehgetriebe, aus welchem ein Füllrohr horizontal herausragt. Auf das Füllrohr wird zum Herstellen der Würste die Darmhaut aufgezogen, die dann beim Füllen und Abdrehen allmählich vom Füllrohr abgezogen wird. Bei der maschinellen Produktion von Wurstwaren werden Darmbremsen eingesetzt, die auf dem Füllrohr beim Füllvorgang den Darm straffen und bremsen. Die Darmbremsen sind dabei in der Haltevorrichtung eingesetzt. Die Haltevorrichtung hat die Aufgabe, die Darmbremse in Position zu halten. Bei angetriebenen Bremsen ist in der Haltevorrichtung ein Antriebsstrang untergebracht, der die Darmbremse z.B. synchron zum Füllrohr beschleunigt bzw. verzögert.

In der Arbeitsposition übergreift die Haltevorrichtung bzw. die Darmbremse das freie Ende des Füllrohrs. Weil die Darmbremse in der Arbeitslage das freie Ende des Füllrohrs umschließen muss, ist dieses freie Ende in dieser Arbeitsposition nicht frei zugänglich. Zum Aufziehen neuer Darmraupen muss daher das Bremsringgehäuse weggeschwenkt werden.

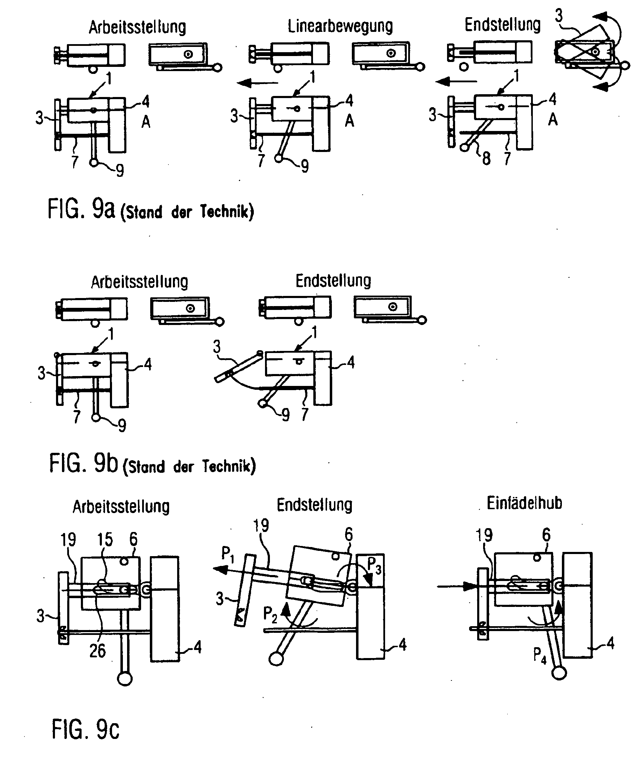

Hierbei gibt es bisher zwei Arten von Haltevorrichtungen:
Eine erste Haltevorrichtung ist beispielsweise im Zusammenhang mit Fig. 9A gezeigt, wobei der Kopf 3 der Haltevorrichtung 1 zunächst linear in Axialrichtung der Haltevorrichtung bzw. in Richtung der Achse des Füllrohrs durch Betätigung eines Schwenkhebels 9 bewegt wird und anschließend nach oben oder unten bewegt wird. Die Haltevorrichtung ist hier an einem Gehäuse 4 des Abdrehgetriebes angeordnet. Dieses System bringt den Nachteil mit sich, dass beim Wegschwenken des Bremskopfes um die horizontale Achse eine Kollision mit weiterführenden Geräten stattfinden kann. Beim Wegschwenken nach unten kollidiert der Kopf 3 unter anderem mit dem Produkt auf dem Tisch. Beim Wegschwenken nach oben ist die Zugänglichkeit zum Füllrohr beim Darmaufziehen erschwert.

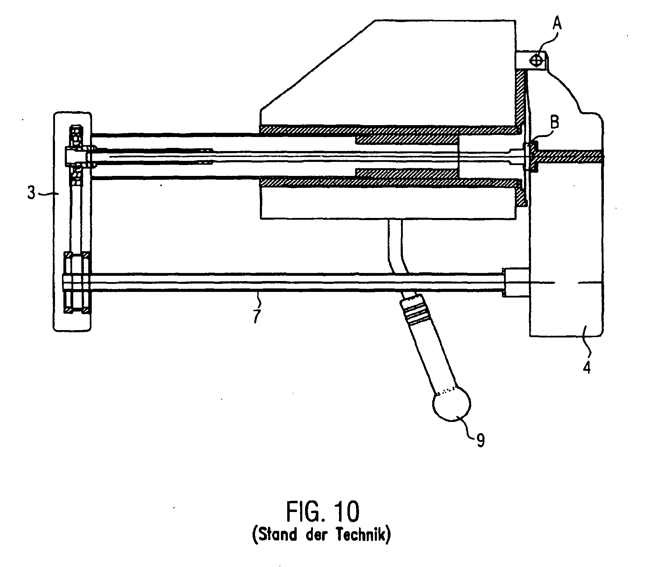

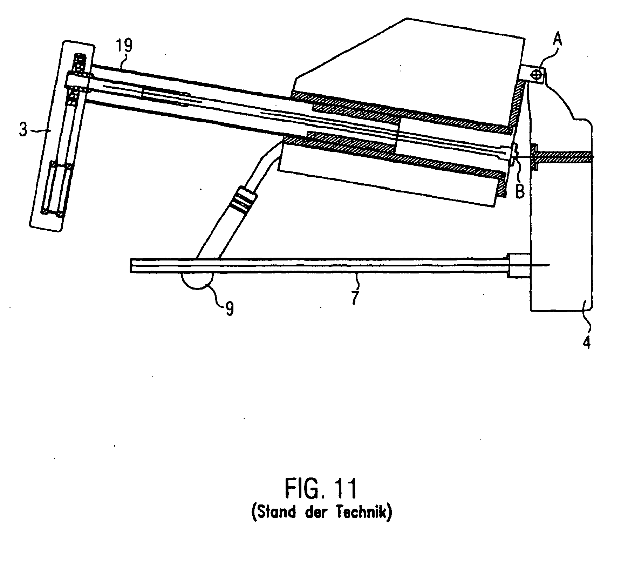

Wie aus Fig. 9B hervorgeht, sind auch bereits Haltevorrichtungen mit einer kreisförmigen Bewegung des Kopfes um eine vertikale Achse bekannt. Eine solche Vorrichtung ist insbesondere auch im Zusammenhang mit den Fig. 10 und 11 gezeigt. Durch Betätigung eines Schwenkhebels 9 wird der Kopf 3 der Haltevorrichtung 1 zusammen mit der Darmbremse zunächst linear axial in Richtung der Achse des Füllrohres bewegt und dann um eine vertikale Achse A weg geschwenkt. Die vertikale Achse A ist so angeordnet, dass der Radius der Schwenkbewegung ausreicht, die Bremse vom Füllrohr 7 ohne Kollision wegzuschwenken. Bei angetriebenen Bremsen muss hierbei jedoch der Antriebsstrang entkoppelt werden, d.h. die Antriebswelle in der Haltevorrichtung muss von dem Antrieb am Gehäuse des Abdrehgetriebes, hier am Punkt B, abgekoppelt werden, da die Flucht des Antriebsstrangs nicht zu halten ist. Dabei geht unter anderem die Winkelposition der Bremse zum Füllrohr verloren. Die Bewegung erfolgt radial um den festen Drehpunkt A, der einen relativ großen Abstand zur Antriebswelle aufweist. Die resultierende Bewegung ist daher auch nachteilig wegen verschiedener Störkanten.

Es ist daher die Aufgabe der vorliegenden Erfindung, eine Haltevorrichtung, sowie ein entsprechendes Verfahren bereitzustellen, die ein einfaches und praktisches Verschwenken der Darmbremse aus einer Arbeitsposition in eine Wursthüllen-Aufziehposition ermöglichen.

Efindungsgemäß wird diese Aufgabe durch die Merkmale der Ansprüche 1 und 13 gelöst.

Der Kopf der Haltevorrichtung, der die Darmbremse aufweist, kann also mit der erfindungsgemäßen Haltevorrichtung auf einfache Art und Weise von einer Arbeitsposition in die Wursthüllen-Aufziehposition bewegt werden. Dabei wird die Antriebswelle ohne Abkoppeln des Antriebsstrangs unter einem Winkel zur Längsachse L der Haltevorrichtung ausgelenkt. Die Längsachse L erstreckt sich in Längsrichtung durch die Antriebswelle in Arbeitsposition und ist parallel zur Längsachse des Füllrohrs. Gemäß der vorliegenden Erfindung muss nun die Antriebswelle, d.h. der Antriebsstrang, nicht mehr vom Antrieb abgekoppelt werden, wie dies im Stand der Technik der Fall ist (siehe Punkt B). Es wird also eine Schwenkbewegung des Kopfes erreicht, bei welcher der Kopf nicht wie im Stand der Technik um eine horizontale Achse nach oben oder unten verschwenkt wird. Somit kann eine Kollision mit weiterführenden Geräten verhindert werden. Dadurch, dass keine Abkopplung erforderlich ist, geht auch die Winkelposition der Bremse zum Rohr nicht verloren.

Vorteilhafterweise liegt dieser Winkel in einem Bereich von 4° bis 90°, insbesondere 10° bis 45°. Somit ist sichergestellt, dass das Füllrohrende gut zugänglich ist.

Es ist ganz besonders vorteilhaft, wenn eine Führung, insbesondere eine Kulissenführung, vorgesehen ist, mit der der Kopf zunächst linear in Axialrichtung, d.h. in Richtung der Längsachse nach vorne, bewegt wird. Ist die Bremse frei, bewegt sich der Kopf dann einer bestimmten Bahn folgend weiter, bis das Füllrohrende für den Bediener gut zugänglich ist. Bei der Bewegung auf der Bahn bewegt sich der Kopf in eine Richtung von der Längsachse L weg, wobei der Kopf vorzugsweise eine überlagerte Bewegung in Axialrichtung der Haltevorrichtung und mindestens einer Richtung, die unter einem Winkel zur Längsachse L liegt, durchführt. Durch die Kombination von verschiedenen Führungen bzw. Bahnen kann eine beliebige Bewegung ausgeführt werden. Dadurch, dass zunächst eine Axialbewegung durchgeführt wird und anschließend eine Bewegung von der Längsachse L weg, ist ein geringer Schwenkwinkel ausreichend. Durch den geringen Schwenkwinkel muss der Antriebstrang nicht entkoppelt werden, da dieser Winkelfehler ausgeglichen werden kann. Vorteilhafterweise liegt die Bewegungsbahn des Kopfes in einer Ebene, die die Längsachse L der Antriebswelle einschließt, insbesondere in einer Horizontalebene. Die Bewegungsbahn kann jedoch auch in einer unter einem Winkel zur Horizontalebene geneigten Ebene liegen.

Gemäß einem bevorzugten Ausführungsbeispiel ist die Antriebswelle zumindest abschnittsweise in einem Lagerrohr drehbar gelagert, das in einem Gehäuse verschiebbar angeordnet ist und an dessen Vorderende der Kopf mit der Darmbremse befestigt ist, wobei das Lagerrohr ein Führungselement aufweist, das in einer Kulissenführung im Gehäuse läuft, wobei die Haltevorrichtung weiter eine Schwenkeinrichtung, insbesondere in Form eines Schwenkhebels, umfasst, mit der das Führungselement in der Führung bewegbar ist. Mit dieser Ausführungsform kann durch Bewegen des Lagerrohrs in einer entsprechenden Führung die Antriebswelle unter einem bestimmten Winkel zur Längsachse L ausgelenkt werden, derart, dass das Füllrohrende in der Wursthüllen-Aufziehposition freigelegt werden kann. Die Bewegung kann vom Anwender in einfacher Art und Weise durch Bewegung der Schwenkeinrichtung, insbesondere durch Bewegen eines Schwenkhebels, durchgeführt werden. Eine solche Haltevorrichtung kann einfach und kostengünstig gefertigt und einfach bedient werden. Somit ist es möglich, dass sich der Kopf der Haltevorrichtung zunächst zusammen mit dem Lagerrohr entlang der Längsachse L nach vorne bewegt, während das Gehäuse nicht bewegt wird, und dann eine überlagerte Bewegung erfolgt, wobei der Kopf zusammen mit dem Lagerrohr weiter axial aus dem Gehäuse bewegt wird, während das Gehäuse von der Längsachse wegbewegt wird.

Die Haltevorrichtung umfasst ein Gehäuse, durch das die Antriebswelle läuft, und weist darüber hinaus ein Gelenk auf, so dass das Gehäuse unter einem Winkel zur Längsachse L bewegbar ist. Somit kann das Gehäuse über das Gelenk am rückwärtigen Ende ebenfalls um den Winkel α zusammen mit der Antriebswelle verschwenkt werden. Diese Anordnung erlaubt eine gute und freie Beweglichkeit des Gehäuses relativ zur Längsachse L. Nachteilige Störkanten können vermieden werden.

Gemäß der Erfindung umfasst die Welle ein Ausgleichselement, das eine Auslenkung der Antriebswelle zur Längsachse L von >4 Grad, insbesondere > 5 Grad erlaubt. Ein solches Ausgleichselement bzw. Ausgleichskupplung ermöglicht, dass die Antriebswelle zum Bewegen in die Wursthütlen-Aufziehposition abgebogen werden kann. Ein möglicher Auslenkbereich bis zu mindestens 45 Grad ist besonders vorteilhaft.

Gemäß der Erfindung ist das Ausgleichselement als axial federndes Wendelprofil in der Welle ausgebildet. Das Ausgleichselement ist im Endbereich, vorzugsweise im hinteren Drittel der Antriebswelle, vorgesehen. Da somit die Drehachse des Kopfes im hinteren Bereich der Antriebswelle liegt, ist ein geringer Schwenkwinkel notwendig, der durch das Ausgleichselement einfach ausgeglichen werden kann, so dass der Antriebsstrang nicht entkoppelt werden muss.

Vorteilhafterweise ist das Ausgleichselement in einem Bereich innerhalb des Gelenks angeordnet, so dass sich mit der Bewegung der Antriebswelle das Gehäuse frei zur Längsachse L bewegen kann und eine besonders stabile Anordnung realisiert werden kann.

Vorteilhafterweise ist die Führung als Führungskulisse in mindestens einer Platte im Gehäuse angeordnet. Eine solche Platte, beispielsweise mit einer Nut oder einer Aussparung, kann besonders einfach gefertigt und individuell an bestimmte Anforderungen durch Ändern bzw. Kombination von verschiedenen hintereinander angeordneten Führungen (Bahnen) realisiert werden. Die Führung kann auch durch Überlagerung von verschiedenen Führungen mit unterschiedlichen Bahnen realisiert werden. Es können auch mehrere Platten mit entsprechenden Führungen überlagert werden, um so eine entsprechende überlagerte Bewegung zu erzielen.

Gemäß einer bevorzugten Ausführungsform erfolgt das Ausschwenken des Kopfes automatisch mittels eines Aktors, insbesondere eines Pneumatikzylinders. Das automatische Ausschwenken kann dann in vorteilhafter Weise, beispielsweise am Ende einer Darmraupe, oder nach einer vorbestimmten Anzahl ausgestoßener Portionen mittels des Aktors erfolgen. Das Einschwenken in die Arbeitsposition kann dann nach dem Aufziehen einer neuen Wursthülle entweder auch automatisch über den Aktor oder aber aus Sicherheitsgründen wieder durch den Bediener mittels eines Hebels erfolgen.

Die vorliegende Erfindung ermöglicht, dass die Haltevorrichtung fest mit einem Gehäuse des Abdrehgetriebes verbunden ist. Dies ist deswegen möglich, da kein Abkoppeln des Antriebsstranges notwendig ist. Dies vereinfacht die gesamte Vorrichtung erheblich.

Eine Füllmaschine zum Füllen von Würsten weist gemäß der Erfindung eine entsprechende Haltevorrichtung zum Halten und Positionieren der Darmbremse auf.
- Fig. 1: zeigt in perspektivischer Darstellung eine Haltevorrichtung zusammen mit einer Füllmaschine gemäß der vorliegenden Erfindung.
- Fig. 2: zeigt einen Horizontalschnitt durch die Haltevorrichtung gemäß der vorliegenden Erfindung in einer Arbeitsposition.
- Fig. 3: zeigt die in Fig. 2 gezeigte Haltevorrichtung in einer ausgeschwenkten Wursthül- len-Aufziehposition.
- Fig. 4: zeigt die in den Fig. 2 und 3 gezeigte Haltevorrichtung in einer Einfädelposition.
- Fig. 5: zeigt schematisch eine Ansicht der erfindungsgemäßen Haltevorrichtung von un- ten in einer Arbeitsposition.
- Fig. 6: zeigt die in Fig. 5 gezeigte Haltevorrichtung in einer Wursthüllen-Aufziehposition.
- Fig. 7: zeigt die in Fig. 5 und 6 dargestellte Haltevorrichtung in einer Einfädelposition.
- Fig. 8A: zeigt schematisch einen Schnitt durch ein Teilstück der Antriebswelle mit einem Ausgleichselement.
- Fig. 8B: zeigt die in Fig. 8A gezeigte Welle mit komprimiertem Ausgleichselement.
- Fig. 8C: zeigt die in Fig. 8A und 8B gezeigte Welle mit abgebogenem, stark vereinfacht dargestelltem Ausgleichselement.
- Fig. 9A: zeigt schematisch die Arbeitsstellung, Linearbewegung und Endstellung einer Haltevorrichtung gemäß dem Stand der Technik.
- Fig. 9B: zeigt schematisch eine Arbeitsstellung und eine Endstellung einer zweiten Aus- führung einer Haltevorrichtung gemäß dem Stand der Technik.
- Fig. 9C: zeigt schematisch die Arbeitsstellung, Endstellung und den Einfädelhub gemäß der vorliegenden Erfindung.
- Fig. 10: zeigt einen Horizontalschnitt durch eine Haltevorrichtung in Arbeitsposition ge- mäß dem Stand der Technik.
- Fig. 11: zeigt die in Fig. 10 gezeigte Haltevorrichtung in einer Wursthüllen-Aufziehposition gemäß dem Stand der Technik.
- Fig. 12: zeigt eine Schnittansicht einer weiteren Ausführungsform der Haltevorrichtung von unten.
- Fig. 13: zeigt eine Schnittansicht eine weitere Haltevorrichtung, die nicht der vorliegenden Erfindung entspricht.

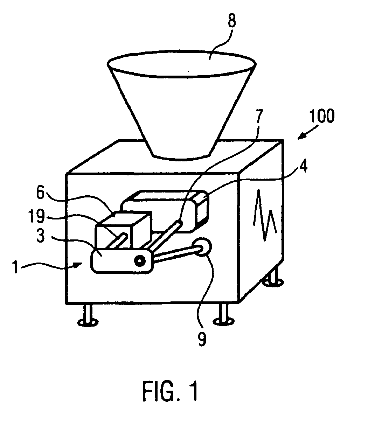

Fig. 1 zeigt in perspektivischer Darstellung eine Füllmaschine mit einer Haltevorrichtung 1 gemäß der vorliegenden Erfindung. Das Bezugszeichen 100 bezeichnet in Fig. 1 als Ganzes eine Maschine zum Füllen und automatischen Abdrehen von Würsten.

Die Maschine wird über einen Fülltrichter 8 mit Wurstbrät beschickt, welches dann mit Hilfe nicht näher dargestellter Einrichtungen zum Portionieren bzw. Abfüllen in Wurstdärme durch das Füllrohr 7 ausgestoßen wird. Zum Abfüllen in Därme wird eine Darmraupe, vom vorderen freien Ende 5 des Füllrohrs 7 her auf das Füllrohr aufgezogen. Nach dem Ausstoßen einer eingestellten Portion wird das Füllrohr 7 durch ein in dem Gehäuse 4 angeordnetes Abdrehgetriebe um die eigene Achse gedreht, um eine Einschnürung der abgefüllten Portion zu erreichen.

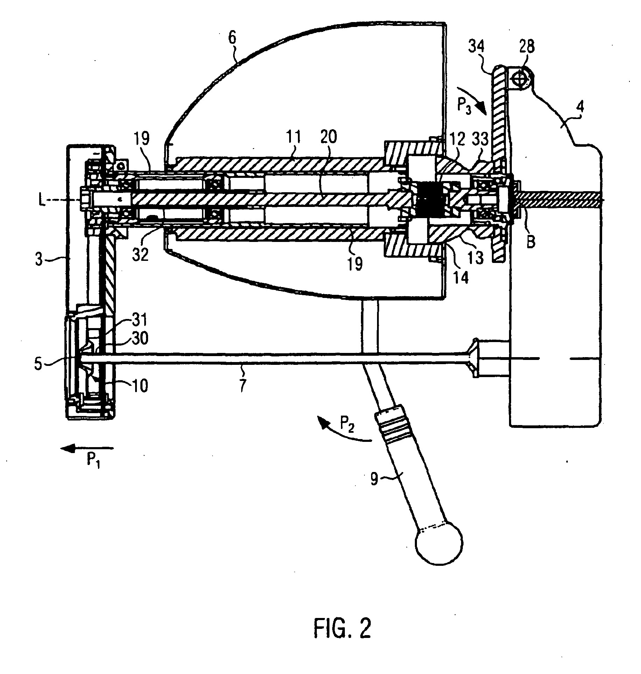

Die Haltevorrichtung 1 weist einen Kopf 3 auf, der in einer Arbeitsposition, wie in Fig. 1 dargestellt ist, das freie Ende 5 des Füllrohrs 7 mit einer Durchgangsöffnung 30 (siehe auch Fig. 2) umschließt. In der Durchgangsöffnung 30 ist die eigentliche Darmbremse 10, die einen Bremsring 31 umfasst, angeordnet. Der Bremsring bremst beim Füllvorgang die Darmraupe in ihrer Abzugsbewegung, so dass die notwendige Spannung des zu füllenden Darms gegeben ist. Damit das Füllrohr beim Abdrehvorgang nicht durchrutscht, ist die Darmbremse 10 antreibbar, so dass sie sich z.B. mit der Drehgeschwindigkeit des Füllrohrs 7 mitdrehen kann. Während also das Füllrohr 7 innerhalb des Darms die Drehbewegung um seine Längsachse ausführt, wird der Darm von außen her von dem Bremsring erfasst und synchron mit der Drehung der Abdrehtülle gedreht.

Weil die Darmbremse 10 im Kopf 3 in der Arbeitslage das freie Ende des Füllrohrs umschließt, ist dieses freie Ende 5 in dieser Arbeitsposition nicht frei zugänglich. Zum Aufziehen neuer Darmraupen muss daher der Kopf 3 mit der Darmbremse 10 weggeschwenkt werden. Die Erfindung ermöglicht dies in der nun im Folgenden detaillierter beschriebenen vorteilhaften Art und Weise.

Fig. 2 zeigt schematisch ein Ausführungsbeispiel der erfindungsgemäßen Haltevorrichtung 1 in Arbeitsposition. Fig. 2 ist dabei ein Horizontalschnitt durch die Haltevorrichtung. Die Haltevorrichtung 1 weist einen Kopf 3 auf, der die Darmbremse 10 umfasst. In der Arbeitsposition umschließt, wie zuvor beschrieben, der Bremsgummi 31 der Darmbremse 10 das Füllrohr 7. Der Bremsring ist in einem Bremsringgehäuse angeordnet. Der Bremsring 31 kann nun, wie zuvor beschrieben wurde, angetrieben werden. Der Antrieb in der Haltevorrichtung 1 erfolgt über den Kupplungspunkt B, die Antriebswelle 20, die sich entlang der Längsachse L erstreckt, und die - über einen nicht näher beschriebenen Zahnradantrieb im Kopf 3 - den Bremsring 31 mit seiner Halterung antreibt. Die Antriebswelle 20 wird am Kupplungspunkt B eingekuppelt, um von einem nicht näher erläuterten Getriebe, das z.B. im Gehäuse 4 angeordnet ist, angetrieben zu werden.

Die Antriebswelle 20 ist hier zumindest abschnittsweise in dem Lagerrohr 19 drehbar gelagert. Das Lagerrohr 19 ist axial in der Halterung 11, wie durch Pfeil P 1 in Fig. 2 dargestellt ist, beweglich angeordnet. Im von der Füllmaschine abgewandten vorderen Endbereich des Lagerrohrs 19 ist die Hülse 32 vorgesehen, in die die Antriebswelle 20 längsverschiebbar eingreift und diese Verbindung derart gestaltet ist, dass sie ein Drehmoment überträgt, wobei über die Hülse 32 das zuvor beschriebene Zahnradgetriebe zum Drehen der Darmbremse angetrieben wird. Der Kopf 3 der Haltevorrichtung ist fest mit dem Lagerrohr 19 verbunden und zusammen mit diesem in Pfeilrichtung P₁ axial beweglich.

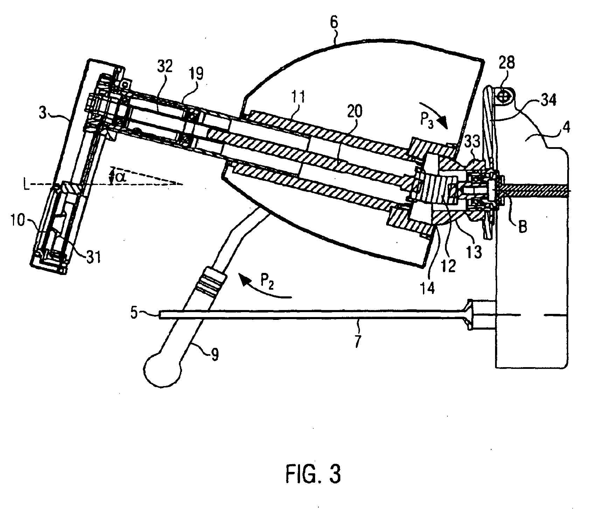

Die Haltevorrichtung umfasst ferner ein Außengehäuse 6, durch das die Antriebswelle 20 hindurchläuft. Die Antriebswelle 20 erstreckt sich über das hintere Ende des Gehäuses 6 bis zum Kupplungspunkt B. Das heißt, dass das hintere Ende des Gehäuses 6 von dem Kupplungspunkt B, hier dem Gehäuse für das Abdrehgetriebe 4, beabstandet ist. Der Abstand wird so groß bemessen, dass bei der Bewegung der Haltevorrichtung in eine Wursthüllen-Aufziehposition (Fig. 3) das Gehäuse 6 nicht an dem Gehäuse für das Abdrehgetriebe 4 oder an einem Gehäuse der Füllmaschine anstößt.

Die Antriebswelle 20 weist im hinteren Bereich, d.h. dem Bereich, der der Füllmaschine 100 zugewandt ist, ein Ausgleichselement 12 auf. Das Ausgleichselement 12 ist dabei vorteilhafterweise im hinteren Drittel der Antriebswelle 20 vorgesehen. Dieses Ausgleichselement ermöglicht eine Bewegung des Kopfes von der Arbeitsposition in die Wursthüllen-Aufziehposition ohne Abkoppeln des Antriebsstrangs, d.h. ohne dass die Antriebswelle 20 am Kupplungspunkt B von dem Antriebsgetriebe abgekoppelt werden muss. Durch das Ausgleichselement 12 kann also die Antriebswelle 20 unter einem Winkel α (siehe Fig. 3) zur Längsachse L ausgelenkt werden. Der Winkel α liegt typischerweise in einem Bereich von 4 bis 45 Grad, kann aber auch bis zu 90 Grad betragen..

Somit liegt die Schwenkachse der Bewegung der Antriebswelle in einem Bereich des Ausgleichelementes 12 .Die Schwenkachse kann vertikal verlaufen oder aber unter einem Winkel zur Vertikalen.

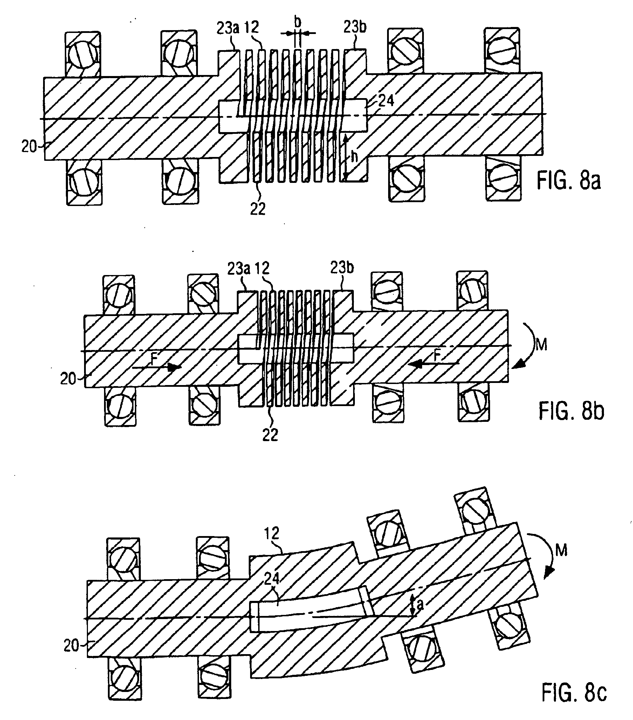

Ein solches Ausgleichselement ist näher in den Fig. 8A, B und C erläutert. Fig. 8A zeigt grob schematisch einen Abschnitt der Antriebswelle 20 mit dem Ausgleichselement 12. Die Welle 20 kann aus einem Stück zusammen mit dem Ausgleichselement 12 gefertigt sein, so dass der Antrieb spiel- und somit verschleißfrei ist. Die Antriebswelle 20 kann aber auch aus mehreren Teilen, z.B. durch ein spielfreies Fügeverfahren, gefertigt werden (z.B. Klemmen, Schweißen etc.). Das Ausgleichselement 12 ist hier in Form eines Wendelprofils in die Antriebswelle 20 eingearbeitet. Bei diesem Ausführungsbeispiel weist das Wendelprofil zunächst im vorderen und hinteren Bereich zu Stabilisierungszwecken einen verbreiterten Abschnitt 23a,b auf, dessen Querschnitt breiter als der Querschnitt der Antriebswelle 20 in den benachbarten Abschnitten ist. Zwischen den verbreiterten Abschnitten 23a und b ist ein Wendelprofil eingearbeitet, wobei sich das Wendelprofil als flächige Ringspirale 22 um die vorzugsweise hohlzylindrische Aussparung 24 in der Welle spiralförmig windet. Das Wendelprofil weist dabei eine bestimmte Steghöhe h, Stegbreite b, eine bestimmte Windungszahl sowie einen bestimmten Werkstoff mit einem geeigneten Elastizitätsmodul auf. Durch entsprechende Wahl der vorab genannten Parameter können unterschiedliche Eigenschaften des Wendelprofils unabhängig voneinander festgelegt werden.

Durch das Ausgleichselement 12 kann die Antriebswelle so gestaltet werden, dass diese im Betrieb ohne Beschädigung auch unter einem Winkel bis zu α > 4 Grad, insbesondere > 5 Grad ausgelenkt werden kann (siehe Fig. 8C). Wie aus Fig. 8B hervorgeht, ist das Wendelprofil so eingearbeitet, dass es axial federnd ist und eine bestimmte Federrate aufweist. Wie aus Fig. 8B hervorgeht, kann, wenn Kräfte F axial auf das Wendelprofil wirken, die Wendel um einen bestimmten Federweg komprimiert werden. Somit kann ein bestimmter axialer und lateraler Ausgleich realisiert werden, was insbesondere auch in der Arbeitsposition während des Betriebs von Vorteil ist. Das Ausgleichselement 12 kann dabei auch ein vorbestimmtes Drehmoment übertragen und arbeitet absolut spielfrei. Zum Wegschwenken der Haltevorrichtung ist also typischerweise eine Auslenkung > 4 Grad bis zu 45 Grad möglich. Die Fig. 8C ist hierbei stark vereinfacht dargestellt, wobei das Wendelprofil nicht im Einzelnen gezeigt ist.

Im hinteren Endbereich der Haltevorrichtung ist das Gelenk 13 (z.B. Scharniergelenk) vorgesehen, derart, dass das Gehäuse 6 unter einem Winkel zur Längsachse L bewegbar ist (siehe Fig. 3). Die Antriebswelle 20 läuft durch das Gelenk 13, wobei sich der Gelenkkopf mit kugelförmiger Außenkontur aus dem Gehäuse 6 nach außen in Richtung der Füllmaschine 100 erstreckt. Die kugelförmige Außenkontur ist aus Gründen der besseren Abdichtung vorgesehen. Wenn auch nicht im Detail dargestellt, kann das Gehäuse 6 ein Dichtelement aufweisen, in Form einer ringförmigen Dichtlippe, an der Stelle 14, das den Spalt zwischen Gelenkkopf und Gehäuse 6 abdichtet. An das Gelenk, hier den Gelenkkopf 13 schließt sich ein Abschnitt 33 an, der die Welle 20 umgibt und lagert, und an dem eine Halterung 34 befestigt ist, über die die Haltevorrichtung 1 am Punkt 28 des Gehäuses 4 befestigt ist. Es ist vorteilhaft, wenn die Haltevorrichtung 1 am Punkt 28 um eine vertikale Drehachse beweglich eingehängt bzw. befestigt werden kann, da dann beim Einbau der Haltevorrichtung die Arbeitswelle 20 einfach an den Kupplungspunkt B geschwenkt und arretiert werden kann. Eine solche Anordnung ermöglicht auch, dass die erfindungsgemäße Haltevorrichtung 1 an bestehende Systeme gekoppelt werden kann (siehe Fig. 10 und 11).

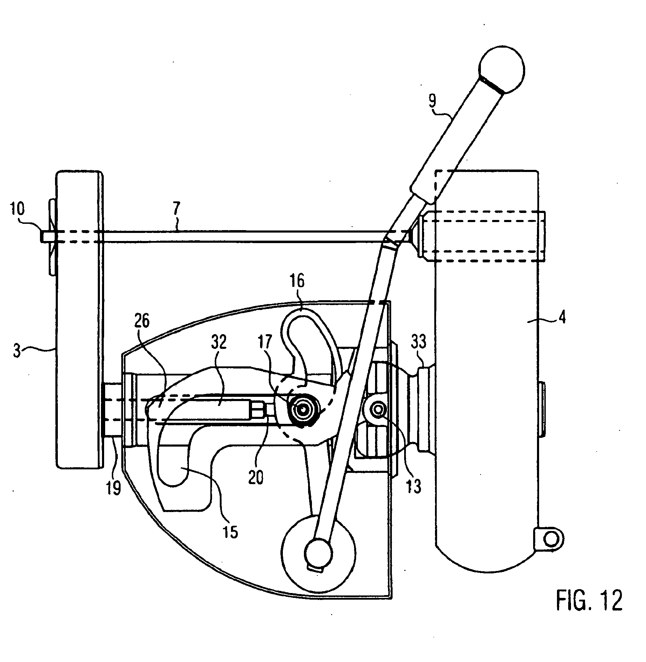

Der Abschnitt 33 könnte aber auch, wie insbesondere aus Fig. 12 hervorgeht, fest mit dem Gehäuse 4 verbunden sein, so dass auch der Kupplungspunkt B des Antriebsstrangs zwischen Haltevorrichtung 1 und Gehäuse 4 entfällt, da die Antriebswelle 20 dann im Gehäuse 4 gelagert werden kann. Somit kann das Gehäuse 4 und die Haltevorrichtung 1 eine nicht trennbare Einheit bilden.

Das Ausgleichselement 12 befindet sich vorteilhafterweise in einem hinteren Drittel der Antriebswelle 20, so dass nur ein kleiner Winkel α notwendig ist, um das Füllrohrende 5 ausreichend freizulegen. Vorteilhafterweise befindet sich das Ausgleichselement 12 innerhalb des Gelenks 13, so dass sich mit der Bewegung der Antriebswelle 20 das Gehäuse 6 frei zur Längsachse L bewegen kann, wobei eine besonders stabile Anordnung realisiert wird.

Wie insbesondere aus den Fig. 2, 3 und 9C hervorgeht, kann also der Kopf 3 der Haltevorrichtung 1 zunächst durch Betätigung des Schwenkhebels 9 in Richtung P₂ in Axialrichtung bewegt werden, wie durch den Pfeil P₁ dargestellt ist. Der Kopf 3 kann dann auf einer Bahn in einer Richtung von der Längsachse L der Haltevorrichtung 1 weggeschwenkt werden, indem der Schwenkhebel 9 weiter in Richtung P₂ bewegt wird, so dass sich die Antriebswelle 20 zusammen mit dem Gehäuse 6, wie durch den Pfeil P₃ dargestellt ist, verschwenkt. Auf dieser Bahn führt der Kopf vorzugsweise eine überlagerte Bewegung in Axialrichtung und in mindestens einer Richtung, die unter einem Winkel zur Längsachse L läuft. Die Bahn liegt in einer Ebene, die die Längsachse L einschließt, vorzugsweise in einer Horizontalebene oder aber auch in einer Ebene, die zur Horizontalebene geneigt ist.

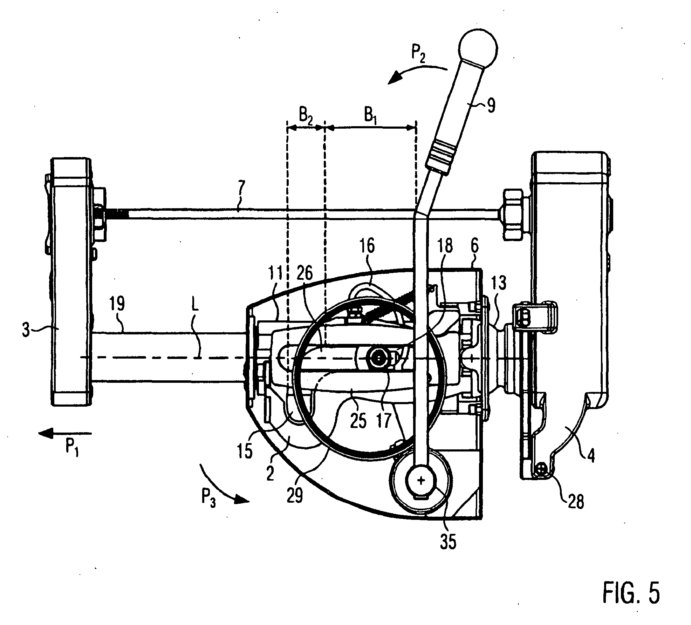

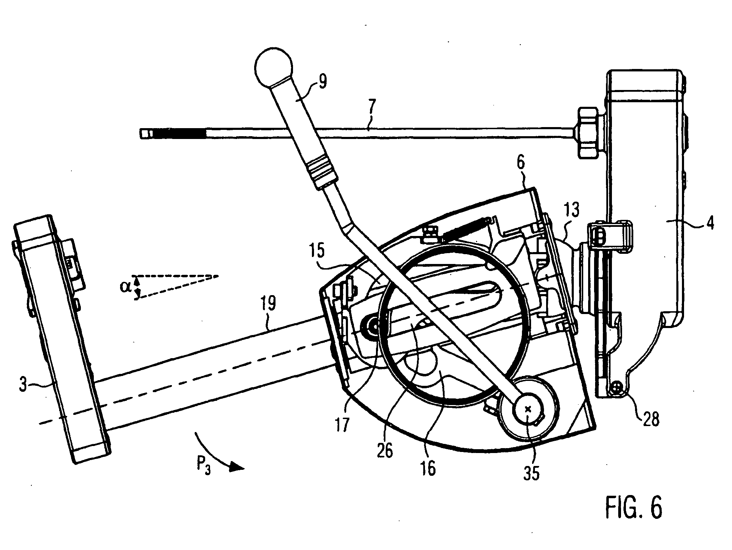

Eine mögliche Ausführungsform, wie die Bewegung des Kopfes 3 erzeugt wird, wird im Zusammenhang mit den Fig. 5 und 6 näher erläutert.

Die Fig. 5 und 6 sind eine Ansicht der Haltevorrichtung von unten, wobei auch die Elemente in dem Gehäuse 6 dargestellt sind. Das Gehäuse 6 kann eine Aussparung 29 aufweisen. Am Lagerrohr 19, an dessen Vorderende der Kopf 3 befestigt ist, befindet sich im Inneren des Gehäuses 6 ein Führungselement 17, beispielsweise in Form einer Rolle 17.

Ferner umfasst die Haltevorrichtung eine Führung 15, 26 hier in Form einer Kulissenführung 15, 26, die hier jeweils z.B. als Aussparung oder Durchbruch in den Platten 2, 25 vorgesehen ist. Die Führung 15 in Platte 2 weist einen geraden Abschnitt B1 auf, der sich bei der in Fig. 5 gezeigten Position in Axialrichtung erstreckt und einen entsprechend einer vorbestimmten Bahn gekrümmten Abschnitt B2.

Bei diesem speziellen Ausführungsbeispiel ist nicht nur eine Platte 2 mit einer Führung 15 vorgesehen, sondern es gibt hier eine weitere Platte 25, die eine weitere Führung 26, d.h. eine zweite Aussparung, aufweist, in der das Führungselement 17 geführt werden kann. Die Aussparung 26 weist hier einen geradlinigen Abschnitt auf, der sich entlang des Lagerrohrs 19 erstreckt, und so am Gehäuse 6 befestigt ist, dass er zusammen mit dem Lagerrohr und der Antriebswelle 20 verschwenkt wird.

Das Führungselement 17 kann über eine Schwenkeinrichtung, insbesondere in Form des Schwenkhebels 9 in der überlagerten Führung 15, 26 bewegt werden. Der Schwenkhebel ist hier an der Unterseite des Gehäuses 6 angebracht.

Es ist auch möglich, den Kopf 3 der Haltevorrichtung automatisch auszuschwenken, beispielsweise am Ende einer Darmraupe oder nach einer vorbestimmten Anzahl ausgestoßener Portionen mittels eines im Gehäuse 6 integrierten Aktors, z.B. eines Pneumatikzylinders. Das Einschwenken in die Arbeitsposition kann dann nach dem Aufziehen einer neuen Wursthülle entweder auch automatisch über den Aktor erfolgen oder aber, aus Sicherheitsgründen, wieder durch den Bediener manuell mit dem Hebel 9.

An einem Lagerbolzen 35 sind der Schwenkhebel 9 und ein kürzerer, im Gehäuse liegender innerer Hebel 16 drehfest angelegt. An dem dem Bolzen gegenüberliegenden Ende weist der Hebel in diesem speziellen Ausführungsbeispiel eine Aussparung 18 auf, in der das Führungselement 17 aufgenommen ist und sich bei Bewegung des Schwenkhebels 9 in Pfeilrichtung P₁ in der Führung 15 und 26 bewegen lässt, derart, dass sich das Führungsrohr 19 in der Halterung 11 (Fig. 2) in Pfeilrichtung P₁ und schließlich entlang einer gekrümmten Bahn im Bereich B2 bewegen kann, wobei durch diese Bewegung die Haltevorrichtung, wie durch Pfeil P₃ dargestellt ist, von der Längsachse L wegschwenkt.

Die in Fig. 5 und Fig. 6 gezeigte Platte 25 mit der Führung bzw. Aussparung 26 ist starr mit dem Gehäuse 6 verbunden. Die Platte 2 mit der Führung bzw. Aussparung 15 ist starr mit dem feststehenden Teilstück des Gelenks 13 verbunden. Bei Bewegung des Schwenkhebels 9 in Richtung P2 bewegt sich im Bereich B1 das Lagerrohr 19 in Richtung P1, also axial aus dem Gehäuse 6. Das Gehäuse 6 bewegt sich hierbei nicht. Im Bereich B2 bewegt sich beim weiteren Schwenken des Schwenkhebels 9 in Richtung P2 das Lagerrohr 19 weiterhin in Richtung P1, also axial aus dem Gehäuse 6. Gleichzeitig bewegt sich nun das Gehäuse 6 in Richtung P3, also von der Längsachse L weg. Die Platte 25 mit der Aussparung 26 hat dabei lediglich die Aufgabe, das Abkippen des Kopfes 3 um die Achse des Lagerrohres 19 zu verhindern.

Diese Anordnung bringt den Vorteil mit sich, dass die Bewegungen auf einfache Art nahezu beliebig miteinander kombinierbar sind.

Alternativ kann die Platte 25 mit der Aussparung 26 ersetzt werden durch eine anderweitige Einrichtung zur Verhinderung des Abkippen des Kopfes 3 durch Verdrehen des Lagerrohres 19 gegenüber dem Gehäuse 6, z.B. durch eine verschiebbare Polygon-Verbindung zwischen dem Lagerrohr 19 und dem Gehäuse 6.

Die vorliegende Erfindung arbeitet wie folgt:
Nach dem Befüllen einer bestimmten Anzahl von Würsten müssen erneut Darmraupen auf das Füllrohr 7 aufgezogen werden. Die Haltevorrichtung befindet sich also zunächst in der in den Fig. 2 und 5 dargestellten Arbeitsposition, bei der die Darmbremse 10 das freie Ende 5 des Füllrohrs 7 umschließt und die Antriebswelle 20 in einer Arbeitsposition ist, d.h. in der die Welle 20 mit dem Zahnradantrieb für die Darmbremse 10, hier über die Hülse 32, verbunden ist. Das Führungselement 17 befindet sich in dem linearen Abschnitt B1 der Führung 15.

Um das freie Ende 5 des Füllrohrs 7 freizulegen, wird nun der Schwenkhebel 9 gegriffen und in Pfeilrichtung P₂ bewegt (siehe Fig. 2, 5 und 9C). Dabei bewegt sich auch der innere Arm 16 des Hebels und schiebt das Führungselement 17 in Pfeilrichtung P₁ in den linearen Abschnitt B1 der Führung 15, 26. Dadurch bewegt sich das Führungsrohr 19 in Axialrichtung aus dem Gehäuse 6 um eine vorbestimmte Strecke, beispielsweise 0 bis 10 cm.

In dem zweiten Abschnitt B2 verläuft die Führungskulisse gekrümmt, entsprechend einer bestimmten Bahn. Bei Weiterbewegen des Schwenkhebels 9 in Pfeilrichtung P₂ bewegt sich daher das Führungselement 17 durch den Bereich B2 der Führung 15, 26. Das Führungselement 17 bewegt sich so lange, bis es am Ende des Bereichs B2 der Führungskulisse 15 anschlägt. Bei diesem speziellen Ausführungsbeispiel sind die Aussparungen in der ersten Platte 2 und der zweiten Platte 25 derart zueinander angeordnet, dass am Ende der Drehbewegung des Schwenkhebels 9 das Führungselement 17 sowohl im Endbereich der Aussparung 15 als auch der Aussparung 26 zum Liegen kommt. Durch Bewegen des Führungselementes 17 in dem Bereich B2 wird automatisch das Verschwenken der Antriebswelle 20, des Gehäuses 6, des Führungsrohrs 19 sowie des Kopfes 3 in Pfeilrichtung P₃ bewirkt. Durch das Ausgleichselement 12 kann die Antriebswelle 20 dabei um den Winkel α verschwenkt werden, ohne dass eine Abkopplung des Antriebsstrangs von dem Antrieb am rückwärtigen Ende der Antriebswelle 20 am Kupplungspunkt B notwendig ist. Wie beim Vergleich der Fig. 2 und 3 hervorgeht, wird das Lagerrohr 19 durch den zuvor genannten Bewegungsmechanismus relativ von der Antriebswelle 20 weg bewegt, so dass die Hülse 32 von der Antriebswelle 20 in Richtung P₁ ein Stück abgezogen, aber nicht abgekoppelt wird.

Um den Kopf 3 wieder in seine Arbeitsposition zu bringen, wird der zuvor erklärte Ablauf rückwärts durchgeführt.

Wie zuvor erläutert, kann der Kopf 3 mit Hilfe der Führung, zunächst linear in Axialrichtung bewegt werden und dann auf einer Bahn in eine Richtung von der Längsachse L der Haltevorrichtung 1 weggeschwenkt werden, wobei auf dieser Bahn der Kopf 3 vorzugsweise eine überlagerte Bewegung in Axialrichtung und in mindestens einer Richtung, die unter einem Winkel zur Längsachse L läuft, durchführt. Durch die Kombination von verschiedenen Führungen (Bahnen) kann eine beliebige Bewegung des Kopfes 3 ausgeführt werden. Vorzugsweise liegt die Bewegungsbahn des Kopfes in einer Ebene, die die Längsachse L einschließt, vorzugsweise in der Horizontalebene oder eine um 0 bis 90 Grad zu der Horizontalebene geneigte Ebene.

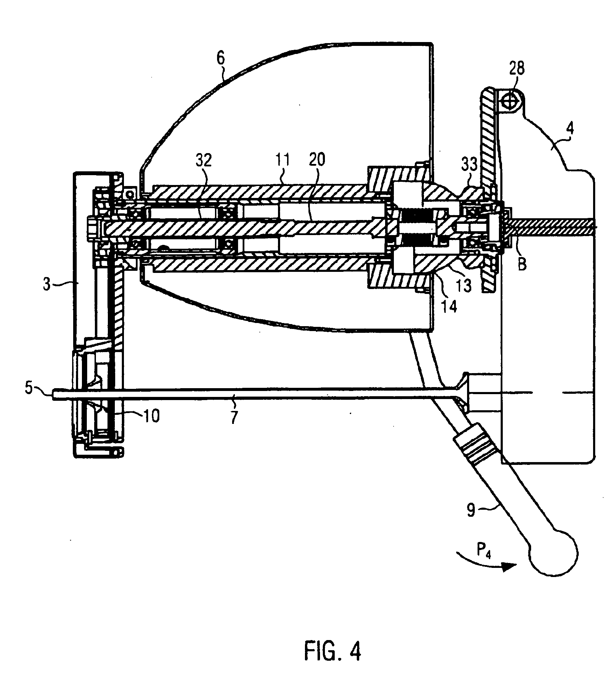

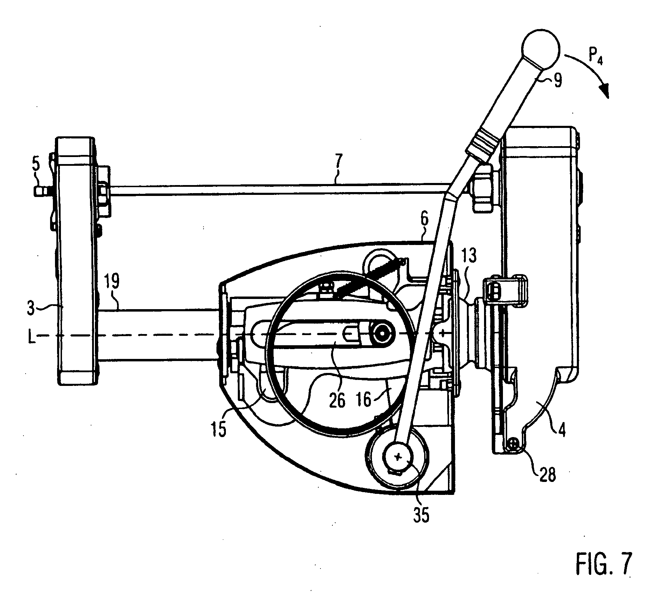

Die Fig. 4 und 7 zeigen die Haltevorrichtung in einer sogenannten Einfädelposition. Hier ist der Kopf noch etwas näher am Gehäuse 4 des Abdrehgetriebes als in der Arbeitsposition positioniert, damit der Bediener das Ende der neu aufgezogenen Wursthülle besser greifen und evtl. verknoten kann. Um diese Position zu erzielen, wird der Schwenkhebel, wie insbesondere aus Fig. 7 hervorgeht, entgegen der Pfeilrichtung P₂ in Richtung P₄ verschwenkt, so dass das Führungselement 17 hier am Ende der Führung 15, 26 anschlägt. Für die normale Arbeitsstellung wird der Schwenkhebel 9 dann wieder in die in den Fig. 3 und 5 gezeigte Position verschwenkt und kann hier auch arretiert werden.

Mit der vorliegenden Erfindung kann eine kombinierte Bewegung aus Linear- und Schwenkbewegung durch eine Überlagerung von verschiedenen, frei wählbaren Bahnen, realisiert werden. Die Drehachse ist derart angeordnet, dass ein geringer Schwenkwinkel entsteht und eine Abkopplung des Antriebsstrangs nicht notwendig ist.

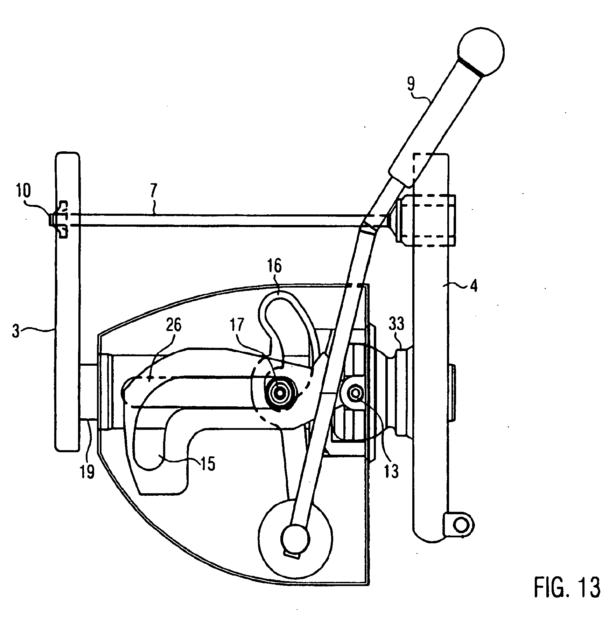

Fig. 13 zeigt eine weitere Haltevorrichtung, die nicht der vorliegenden Erfindung entspricht. Bei den in Fig. 1 bis 12 dargestellten Haltevorrichtungen 1 weist die Haltevorrichtung einen Antriebsstrang für die Darmbremse 10 auf.

Im Gegensatz zu den vorherigen Ausführungsbeispielen ist hier der Bremsring feststehend oder frei drehbar gelagert, wobei dann der Bremsring durch das Füllrohr 7 mittels Reibschluss angetrieben wird. Der Verschwenkmechanismus des in Fig. 13 gezeigten Beispiels entspricht dem in den Fig. 1 bis 12 gezeigten Verschwenkmechanismus mit der Ausnahme, dass keine Antriebswelle für die Darmbremse vorgesehen ist. Auch hier wird der Kopf 3 über eine Halterung, die sich in Arbeitsposition in Richtung der Längsachse L erstreckt, gehalten. Hier ist die Halterung das zuvor beschriebene Lagerrohr 19. Die Halterung, d.h. das Lagerrohr 19, kann dann ebenfalls um einen Winkel α zur Längsachse L verschwenkt werden. Die Halterung für das Lagerrohr 19 ist in dem Gehäuse 6 axial verschiebbar gelagert und weist ein Führungselement 17 auf, das in der Kulissenführung 15, 26 läuft. Auch hier ist der Schwenkhebel 9 vorgesehen, mit dem in gleicher Weise, wie bei dem vorherigen Ausführungsbeispiel, das Führungselement 17 in der Führung 15, 26 bewegbar ist. Somit kann der Kopf 3 mit Hilfe der Führung, insbesondere Kulissenführung 15, 26, zunächst linear in Axialrichtung nach vorne bewegt werden und dann auf einer Bahn, hier ebenfalls einer gekrümmten Bahn, in einer Richtung von der Längsachse L der Haltevorrichtung weggeschwenkt werden. Auf dieser Bahn führt der Kopf vorzugsweise eine überlagerte Bewegung in Axialrichtung, d.h. nach vorne, und in mindestens einer Richtung, die unter einem Winkel zur Längsachse L läuft, durch. Somit kann auch bei dieser Haltevorrichtung, die keinen Antrieb für die Darmbremse aufweist, der Kopf in geschickter Art und Weise aus der Arbeitsposition in eine Wursthüllenaufziehposition verschwenkt werden.

## Patentansprüche

1. Haltevorrichtung (1) für eine Füllmaschine zum Füllen von Würsten mit einem Kopf (3), der eine Darmbremse (10) aufweist und mit
einer Antriebswelle (20), über die die Darmbremse (10) antreibbar ist, wobei die Darmbremse (10) das freie Ende eines Füllrohrs (7) der Füllmaschine in einer Arbeitsposition umschließt und die Darmbremse durch Wegschwenken des Kopfes (3) das freie Ende (5) des Füllrohrs (7) in einer Wursthüllen-Aufziehposition freilegt,
**dadurch gekennzeichnet, dass**
die Antriebswelle (20) beim Bewegen des Kopfes (3) von der Arbeitsposition in die Wursthüllen-Aufziehposition ohne Abkoppeln des Antriebsstrangs unter einem Winkel α zur Längsachse (L) der Haltevorrichtung ausgelenkt wird, die Antriebswelle (20) ein Ausgleichselement (12) umfasst, das eine Auslenkung der Welle zur Längsachse (L) von > 4 Grad erlaubt, wobei
das Ausgleichselement (12) als axial federndes Wendelprofil in der Antriebswelle (20) ausgebildet ist.

2. Haltevorrichtung nach Anspruch 1, **dadurch gekennzeichnet, dass** der Winkel α in einem Bereich von 4° bis 90°, insbesondere 10° bis 45° liegt.

3. Haltevorrichtung nach Anspruch 1 oder 2, **dadurch gekennzeichnet, dass** der Kopf (3) mit Hilfe einer Führung, insbesondere Kulissenführung (15,26), zunächst linear in Axialrichtung bewegt wird und dann auf einer Bahn in einer Richtung von der Längsachse (L) der Haltevorrichtung weggeschwenkt wird, wobei auf dieser Bahn der Kopf (3) vorzugsweise eine überlagerte Bewegung in Axialrichtung und in mindestens einer Richtung, die unter einem Winkel zur Längsachse (L) läuft, durchführt.

4. Haltevorrichtung nach mindestens einem der Ansprüche 1 bis 3, **dadurch gekennzeichnet, dass** die Bahn in einer Ebene liegt, die die Längsachse (L) einschließt, vorzugsweise in der Horizontalebene.

5. Haltevorrichtung nach mindestens einem der Ansprüche 1 bis 4, **dadurch gekennzeichnet, dass** die Antriebswelle (20) zumindest abschnittsweise in einem Lagerrohr (19) drehbar gelagert ist, das in einem Gehäuse (6) verschiebbar gelagert ist, und an dessen Vorderende der Kopf (3) befestigt ist, wobei das Lagerrohr (19) ein Führungselement (17) aufweist, das in einer Kulissenführung (15,26) läuft, wobei die Haltevorrichtung (1) weiter eine Schwenkeinrichtung, insbesondere in Form eines Schwenkhebels (9), umfasst, mit der das Führungselement (17) in der Führung (15,26) bewegbar ist.

6. Vorrichtung nach mindestens einem der Ansprüche 1 bis 5, **dadurch gekennzeichnet, dass** die Haltevorrichtung (1) ein Gehäuse (6) umfasst, durch das die Antriebswelle (20) läuft, wobei das Gehäuse ein Gelenk (13) aufweist, derart, dass es unter einem Winkel zur Längsachse (L) bewegbar ist.

7. Haltevorrichtung nach mindestens einem der Ansprüche 1 bis 6, **dadurch gekennzeichnet, dass** eine Auslenkung der Welle zur Längsachse (L) von > 5 Grad und vorzugsweise mindestens bis zu 45 Grad erlaubt ist.

8. Haltevorrichtung nach Anspruch 6 oder 7, **dadurch gekennzeichnet, dass** das Ausgleichselement (12) in einem Bereich der Antriebswelle, insbesondere in einem Bereich innerhalb des Gelenks (13) angeordnet ist.

9. Haltevorrichtung nach mindestens einem der Ansprüche 1 bis 8, **dadurch gekennzeichnet, dass** die Führung (15;26) durch Überlagerung von verschiedenen Führungen (15,26) mit unterschiedlichen Bahnen realisiert wird und insbesondere als Führungskulisse in mindestens einer Platte (2;25) im Gehäuse (6) angeordnet ist.

10. Haltevorrichtung nach mindestens einem der Ansprüche 1 bis 9, **dadurch gekennzeichnet, dass** das Ausschwenken des Kopfes (3) automatisch mittels eines Aktors, insbesondere eines Pneumatikzylinders, erfolgt.

11. Haltevorrichtung nach mindestens einem der Ansprüche 1 bis 10, **dadurch gekennzeichnet, dass** die Haltevorrichtung fest mit einem Gehäuse (4) des Abdrehgetriebes verbunden ist.

12. Füllmaschine (100) zum Füllen von Würsten mit pastöser Masse mit einer Haltevorrichtung zum Halten und Positionieren einer Darmbremse (10) nach mindestens einem der Ansprüche 1 bis 12 , einem Fülltrichter (8) sowie einem Füllrohr (7).

13. Verfahren zum Positionieren einer Haltevorrichtung (1) nach mindestens einem der Ansprüche 1 bis 11, **dadurch gekennzeichnet, dass** zum Bewegen des Kopfes (3) der Haltevorrichtung (1) von der Arbeitsposition in die Wursthüllen-Aufziehposition die Antriebswelle (20) ohne Abkoppeln des Antriebsstrangs unter einem Winkel α zur Längsachse (L) ausgelenkt wird, wobei die Antriebswelle (20) ein Ausgleichselement (12) umfasst, das eine Auslenkung der Welle zur Längsachse (L) von > 4 Grad erlaubt und wobei
das Ausgleichselement (12) als axial federndes Wendelprofil in der Antriebswelle (20) ausgebildet ist.

14. Verfahren nach Anspruch 13, **dadurch gekennzeichnet, dass** der Kopf zunächst linear in Axialrichtung der Haltevorrichtung (1) bewegt wird und dann auf einer Bahn in einer Richtung von der Längsachse (L) weggeschwenkt wird, wobei auf dieser Bahn der Kopf (3) vorzugsweise eine überlagerte Bewegung in Axialrichtung und mindestens einer Richtung, die unter einem Winkel zur Längsachse (L) läuft, durchführt.

15. Verfahren nach mindestens einem der Ansprüche 13 bis 14, **dadurch gekennzeichnet, dass** der Kopf (3) auf einer Bahn bewegt wird, die in einer Ebene liegt, die die Längsachse (L) der Antriebswelle (1) einschließt, insbesondere in einer Horizontalebene.

## Claims

1. Holding device (1) for a stuffing machine for stuffing sausages, having a head (3) which comprises a casing brake (10), and having a driveshaft (20), via which the casing brake (10) can be driven, the casing brake (10) enclosing the free end of a filling tube (7) of the stuffing machine in an operating position and the casing brake exposing the free end (5) of the filling tube (7) by pivoting the head (3) away in a sausage casing pull-on position, **characterised in that** when the head (3) is being moved from the operating position into the sausage casing pull-on position the driveshaft (20) is deflected at an angle α to the longitudinal axis (L) of the holding device without decoupling the power train, the driveshaft (20) comprises a compensation element (12) which allows a deflection of the shaft from the longitudinal axis (L) of > 4 degrees, wherein the compensation element (12) is designed as an axially resilient helical profile in the driveshaft (20).

2. Holding device according to claim 1, **characterised in that** the angle α lies in a range from 4° to 90°, in particular 10° to 45°.

3. Holding device according to either claim 1 or claim 2, **characterised in that** with the aid of a guide, in particular a sliding block guide (15, 26), the head (3) is first moved linearly in the axial direction, and is then pivoted in a direction away from the longitudinal axis (L) of the holding device along a path, the head (3) preferably executing on this path a superimposed movement in the axial direction and in at least one direction extending at an angle to the longitudinal axis (L).

4. Holding device according to at least one of claims 1 to 3, **characterised in that** the path extends in a plane which includes the longitudinal axis (L), preferably in the horizontal plane.

5. Holding device according to at least one of claims 1 to 4, **characterised in that** the driveshaft (20) is, at least in portions, rotatably mounted in a support tube (19), which is displaceably mounted in a housing (6) and at the front end of which the head (3) is fixed, the support tube (19) comprising a guide element (17) which runs in a sliding block guide (15, 26), (he holding device (1) further comprising a pivot means, in particular in the form of a pivoted lever (9), with the aid of which the guide element (17) can be moved in the guide (15, 26).

6. Device according to at least one of claims 1 to 5, **characterised in that** the holding device (1) comprises a housing (6) through which the driveshaft (20) extends, the housing comprising a joint (13) of such a nature that it is movable at an angle to the longitudinal axis (L).

7. Holding device according to at least one of claims 1 to 6, **characterised in that** a deflection of the shaft from the longitudinal axis (L) is > 5 degrees and preferably at least up to 45 degrees.

8. Holding device according to claims 6 or 7, **characterised in that** the compensation element (12) is arranged in a region of the driveshaft, in particular in a region inside the joint (13).

9. Holding device according to at least one of claims 1 to 8, **characterised in that** the guide (15, 26) is formed by superimposing various guides (15, 26) with various paths, and in particular is arranged as a sliding block guide in at least one plate (2: 25) in the housing (6).

10. Holding device according to at least one of claims 1 to 9, **characterised in that** the head (3) is pivoted out automatically by means of an actuator, in particular a pneumatic cylinder.

11. Holding device according to at least one of claims 1 to 10, **characterised in that** the holding device is rigidly connected to a housing (4) of the twist-off gear unit.

12. Stuffing machine (100) for stuffing sausages with a pasty mass, comprising a holding device for holding and positioning a casing brake (10) according to at least one of claims 1 to 12, a hopper (8) and a filling tube (7).

13. Method for positioning a holding device (1) according to at least one of claims 1 to 11, **characterised in that** in order to move the head (3) of the holding device (1) from the operating position into the sausage casing pull-on position the driveshaft (20) is deflected at an angle α to the longitudinal axis (L) without decoupling the power train, wherein the driveshaft (20) comprises a compensation element (12) which allows a deflection of the shaft from the longitudinal axis (L) of > 4 degrees, and wherein the compensation element (12) is designed as an axially resilient helical profile in the driveshaft (20).

14. Method according to claim 13, **characterised in that** the head is first moved linearly in the axial direction of the holding device (1) and is then pivoted in a direction away from the longitudinal axis (L) along a path, the head (3) executing over this path a superimposed movement in the axial direction and in at least one direction extending at an angle to the longitudinal axis (L).

15. Method according to at least one of claims 13 to 14, **characterised in that** the head (3) is moved along a path which lies in a plane which includes the longitudinal axis (L) of the driveshaft (1), in particular in a horizontal plane.

## Revendications

1. Dispositif de retenue (1) pour une machine de remplissage de saucisses, comprenant une tête (3), qui présente un frein de boyau (10), et
un arbre d'entraînement (20), par l'intermédiaire duquel est entraînable le frein de boyau (10), le frein de boyau (10) entourant l'extrémité libre d'un tube de remplissage (7) de la machine dans une position de travail et le frein de boyau dégageant, par pivotement de la tête (3), l'extrémité libre (5) du tube de remplissage (7) dans une position de tirage des enveloppes de saucisses,
**caractérisé en ce que**
l'arbre d'entraînement (20), lors du déplacement de la tête (3) de la position de travail dans la position de tirage des enveloppes de saucisses, est dévié sans découplage de la ligne d'entraînement sous un angle α par rapport à l'axe longitudinal (L) du dispositif de retenue, l'arbre d'entraînement (20) comprend un élément d'équilibrage (12), qui permet une déviation de l'arbre par rapport à l'axe longitudinal (L) de plus de 4°, et
l'élément d'équilibrage (12) est réalisé sous forme de profilé hélicoïdal à élasticité axiale dans l'arbre d'entraînement (20).

2. Dispositif de retenue suivant la revendication 1, **caractérisé en ce que** l'angle α se situe dans un intervalle de 4° à 90°, en particulier de 10° à 45°.

3. Dispositif de retenue suivant l'une des revendications 1 et 2, **caractérisé en ce que** la tête (3) est d'abord déplacée linéairement dans la direction axiale à l'aide d'un guide, en particulier un guide de coulisse (15, 26), puis est animée d'un mouvement de pivotement sur une trajectoire, dans une direction, à l'écart de l'axe longitudinal (L) du dispositif de retenue, la tête (3) exécutant de préférence sur cette trajectoire un déplacement superposé dans la direction axiale et dans au moins une direction, qui s'étend sous un angle par rapport à l'axe longitudinal (L).

4. Dispositif de retenue suivant l'une au moins des revendications 1 à 3, **caractérisé en ce que** la trajectoire se situe dans un plan, qui renferme l'axe longitudinal (L), de préférence dans le plan horizontal.

5. Dispositif de retenue suivant l'une au moins des revendications 1 à 4, **caractérisé en ce que** l'arbre d'entraînement (20) est monté tournant, au moins par sections, dans un tube support (19), qui est logé avec une possibilité de déplacement dans un carter (6) et sur l'extrémité avant duquel est fixée la tête (3), le tube support (19) présentant un élément de guidage (17) qui s'étend dans un guide de coulisse (15, 26), le dispositif de retenue (1) comprenant en outre un dispositif de pivotement, en particulier en forme d'un levier pivotant (9), qui permet de déplacer l'élément de guidage (17) dans le guide (15, 26).

6. Dispositif suivant l'une au moins des revendications 1 à 5, **caractérisé en ce que** le dispositif de retenue (1) comprend un carter (6), au travers duquel s'étend l'arbre d'entraînement (20), le carter présentant une articulation (13) de telle sorte qu'il peut se déplacer sous un angle par rapport à l'axe longitudinal (L).

7. Dispositif de retenue suivant l'une au moins des revendications 1 à 6, caractérisé en ce une déviation de l'arbre par rapport à l'axe longitudinal (L) est de plus de 5°, et de préférence au moins jusqu'à 45°.

8. Dispositif de retenue suivant les revendications 6 ou 7, **caractérisé en ce que** l'élément d'équilibrage (12) est disposé dans une zone de l'arbre d'entraînement, en particulier dans une zone à l'intérieur de l'articulation (13).

9. Dispositif de retenue suivant l'une au moins des revendications 1 à 8, **caractérisé en ce que** le guide (15 ; 26) est réalisé par superposition de guides différents (15, 26) avec des trajectoires différentes et est disposé en particulier, sous forme de coulisse de guidage, dans au moins une plaque (2 ; 25) dans le carter (6).

10. Dispositif de retenue suivant l'une au moins des revendications 1 à 9, **caractérisé en ce que** le pivotement de la tête (3) s'effectue automatiquement au moyen d'un actionneur, en particulier d'un cylindre pneumatique.

11. Dispositif de retenue suivant l'une au moins des revendications 1 à 10, **caractérisé en ce que** le dispositif de retenue est assemblé fixement avec un carter (4) de l'engrenage de séparation par torsion.

12. Machine de remplissage (100) de saucisses par une masse pâteuse comprenant un dispositif de retenue pour maintenir et positionner un frein de boyau (10) suivant l'une au moins des revendications 1 à 12, un entonnoir de remplissage (8), ainsi qu'un tube de remplissage (7).

13. Procédé de positionnement d'un dispositif de retenue (1) suivant l'une au moins des revendications 1 à 11, **caractérisé en ce que**, pour le déplacement de la tête (3) du dispositif de retenue (1) de la position de travail dans la position de tirage des gaines de saucisses, l'arbre d'entraînement (20) est dévié sans découplage de la ligne d'entraînement sous un angle α par rapport à l'axe longitudinal (L), et, l'arbre d'entraînement (20) comprend un élément d'équilibrage (12), qui permet une déviation de l'arbre par rapport à l'axe longitudinal (L) de plus de 4°, et
l'élément d'équilibrage (12) est réalisé sous forme de profilé hélicoïdal à élasticité axiale dans l'arbre d'entraînement (20).

14. Procédé suivant la revendication 13, **caractérisé en ce que** la tête est d'abord déplacée linéairement dans la direction axiale du dispositif de retenue (1), puis est animée d'un mouvement de pivotement sur une trajectoire, dans une direction, à l'écart de l'axe longitudinal (L), la tête (3) exécutant alors de préférence sur cette trajectoire un déplacement superposé dans la direction axiale et au moins dans une direction, qui s'étend sous un angle par rapport à l'axe longitudinal (L).

15. Procédé suivant l'une au moins des revendications 13 à 14, **caractérisé en ce que** la tête (3) est déplacée sur une trajectoire qui se situe dans un plan renfermant l'axe longitudinal (L) de l'arbre d'entraînement (1), en particulier dans un plan horizontal.
